# EUROPEAN PATENT SPECIFICATION

(11) **EP 3 336 141 B1**
(45) Date of publication and mention of the grant of the patent: **14.08.2019**
(21) Application number: 17208246.3
(22) Date of filing: 18.12.2017
(51) Int. Cl.: C08L 9/00, C08L 7/00, B29B 15/10, B29D 30/38, B29C 59/14, B60C 9/00, C08J 5/04, C08J 5/06, B05D 3/14, B29B 15/08

(54) **ATMOSPHERIC PLASMA TREATMENT OF REINFORCEMENT CORDS AND USE IN RUBBER ARTICLES**
ATMOSPHÄRISCHE PLASMABEHANDLUNG VON VERSTÄRKUNGSCORD UND VERWENDUNG IN GUMMIARTIKELN
TRAITEMENT AU PLASMA ATMOSPHÉRIQUE DE CORDONS DE RENFORT ET UTILISATION DANS DES ARTICLES EN CAOUTCHOUC

(30) Priority: 19.12.2016 US 201662435909 P
(43) Date of publication of application: 20.06.2018
(73) Proprietor: The Goodyear Tire & Rubber Company, Akron, OH 44316 (US)
(72) Inventor: SIFFER, Frederic Gerard Auguste, L-5861 Fentange (LU); HOBELMAN, Jerome Bernard, Sullivan, OH Ohio 44880 (US); GILLICK, James Gregory, Akron, OH Ohio 44313 (US); GERSMAN, Michael Lawrence, Akron, OH Ohio 44311 (US); CHANDRA, Dinesh, Hudson, OH Ohio 44236 (US); QU, Dan, Lyndhurst, OH Ohio 44124 (US); BOTTS, Bina Patel, Cuyahoga Falls, OH Ohio 44223 (US); VANGENEUGDEN, Dirk, B-2400 Mol (BE); VERHEYDE, Bert, B-2400 Mol (BE); VAN HOOF, Erwin, B-2400 Mol (BE)
(74) Representative: Kutsch, Bernd

(56) References cited:
- EP-A1- 2 371 882
- EP-A1- 2 716 694
- EP-A1- 2 716 695
- EP-A2- 2 431 195
- US-A- 5 283 119
- H. M. KANG ET AL: "Enhanced adhesion of aramid tire cords via argon plasma etching and acetylene plasma polymerization", JOURNAL OF ADHESION SCIENCE AND TECHNOLOGY, vol. 20, no. 11, 5 April 2006 (2006-04-05) , pages 1155-1169, XP055465965, GB ISSN: 0169-4243, DOI: 10.1163/156856106777920802

## Description

### Background

Rubber is typically reinforced with various embodiments of textile, glass or steel fibers to provide basic strength, shape, stability, and resistance to bruises, fatigue, and heat. These fibers may be twisted into plies and cabled into cords. Rubber tires of various construction as well as various industrial products such as belts, hoses, seals, bumpers, mountings, and diaphragms can be prepared using such cords.

Manufacturers of rubber reinforced articles have long realized the importance of the interfacial adhesion of reinforcement of its rubber environment. Specialized coatings such are resorcinol/formaldehyde latex adhesives for polymeric cords and brass plating for steel cords are typically applied to fiber and wire reinforcements to enable them to function effectively for tire use. In addition, the compounds used to coat these reinforcements are usually specially formulated to develop adhesion. For example, many tire manufacturers use various cobalt salts as bonding promoters in their steel cord wire coats, as well as using relatively high ratios of sulfur to cure accelerator. The bonding promoters are added through compounding. To achieve a maximum bonding strength, an excess amount of cobalt salt is often added to the wire coat. Since only a very small portion of the cobalt salt may be engaged in the rubber-metal interfacial bonding reaction, most of the cobalt salts remained in the compound as excess cobalt without any contribution to the bonding. Cobalt is expensive and may even cause aging problems of the rubber when used in excess, as well as having objectionable environmental effects.

It continuously remains desirable to improve adhesion of reinforcement cords to rubber while simultaneously improving the properties of the coat compounds and reducing their cost.

### Summary of the invention

The invention relates to a method in accordance with claim 1, to a reinforcement cord in accordance with claim 12 and to a reinforced rubber or elastomer article in accordance with claim 14.

Dependent claims refer to preferred embodiments of the invention.

In one aspect, the present invention is directed to a method of making a cord-reinforced rubber article, comprising the steps of
a) mixing a carrier gas, at least one sulfur-containing compound and an alkyne, to form a gas mixture;
b) generating an atmospheric pressure plasma from the gas mixture;
c) exposing a reinforcement cord to the atmospheric pressure plasma to produce a treated reinforcement cord; and
d) contacting the treated reinforcement cord with a rubber composition comprising a diene based elastomer.

The invention is further directed to cord reinforced rubber articles made by the method.

### Brief description of the drawings

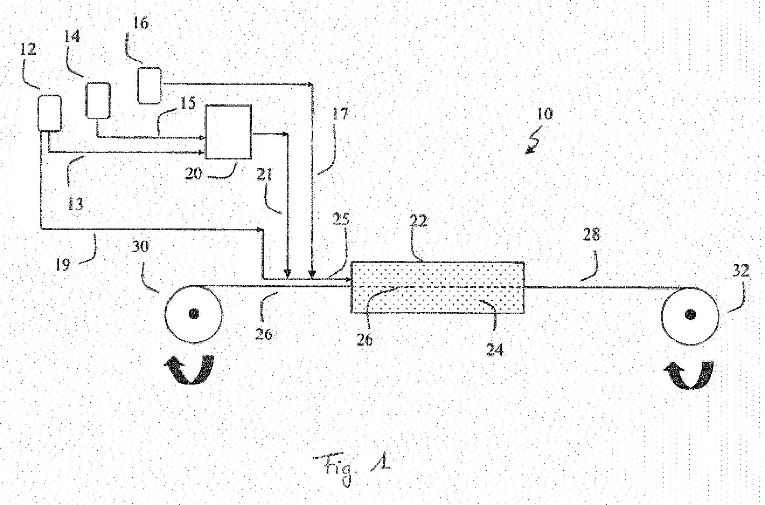

The sole drawing is a schematic representation of one embodiment of the present invention.

### Detailed description of example embodiments of the invention

There is disclosed a method of making a cord-reinforced rubber article, comprising the steps of
a) mixing a carrier gas, at leasy one sulfur-containing compound and an alkyne, to form a gas mixture;
b) generating an atmospheric pressure plasma from the gas mixture;
c) exposing a reinforcement cord to the atmospheric pressure plasma to produce a treated reinforcement cord; and
d) contacting the treated reinforcement cord with a rubber composition comprising a diene based elastomer.

With reference now to the drawing, one embodiment of a method of treating a reinforcement cord, preferably a steel reinforcement cord, according to the present invention is illustrated. In the process 10, a carrier gas 13 is fed from a storage vessel 12 to an atomizer 20 along with carbon disulfide 15 from a storage vessel 14. The carrier gas 13 and the carbon disulfide 15 are atomized in the atomizer 20 to form atomized mixture 21. Acetylene 17 from a storage vessel 16 and the atomized mixture 21 are mixed into a stream of carrier gas 19 to form gas mixture 25. The gas mixture 25 is sent to a plasma generator 22, where a atmospheric plasma 24 is generated from the gas mixture 25. A reinforcement cord 26 is unwound from a spool 30 and conveyed through the plasma generator 22 and the atmospheric plasma 24 for deposition of a surface treatment by the plasma 24. A treated reinforcement cord 28 exits the plasma generator 22 and is wound onto a spool 32 for storage.

The plasma generator may be any suitable plasma generation device as are known in the art to generate atmospheric pressure plasmas, such as atmospheric pressure plasma jet, atmospheric pressure microwave glow discharge, atmospheric pressure glow discharge, and atmospheric dielectric barrier discharge. In one embodiment, the plasma generator is of the dielectric barrier discharge type. The dielectric barrier discharge apparatus generally includes two electrodes with a dielectric-insulating layer disposed between the electrodes and operate at about atmospheric pressures. The dielectric barrier discharge apparatus does not provide one single plasma discharge, but instead provides a series of short-lived, self-terminating arcs, which on a long-time scale (greater than a microsecond), appears as a stable, continuous, and homogeneous plasma. The dielectric layer serves to ensure termination of the arc. Further reference is made to US-B-6,664,737 for its teaching regarding the operation of a dielectric barrier discharge apparatus. Suitable configurations for treatment of substrates using atmospheric plasmas are known, for example, in US-B-9,255,330 and US-B-8,927,052 and US-A-2010/0028561, US-A-2009/0148615, and US-A-2007/0202270.

By atmospheric pressure plasma, it is meant that the pressure of the plasma is equal to or slightly above the ambient pressure of the surroundings. The pressure of the plasma may be somewhat higher than ambient, such that the plasma pressure is sufficient to induce the desired flow rate through the atomizer and plasma generator.

The atomized mixture includes a carrier gas, and sulfur-containing compound and an alkyne.

Preferred suitable alkynes are C2 to C10 alkynes such as acetylene, propyne, 1-butyne, 2-butyne, 1-pentyne, 2-pentyne, 3-methylbut-1-yne, 1-hexyne, 2-hexyne, 3-hexyne, 3,3-dimethylbut-1-yne, 1-heptyne and isomers, 1-octyne and isomers, 1-nonyne and isomers, and 1-decyne and isomers. In a preferred embodiment, the alkyne is acetylene.

In a preferred embodiment, the sulfur-containing compound is selected from carbon disulfide, carbonyl sulfide, thiophene, dimethyl sulfide, diethyl sulfide, methyl ethyl sulfide, dimethyldisulfide, diethyldisulfide, methyl ethyl disulfide, diphenyldisulfide, chloromethyl methyl sulfide, thiobenzophenone, 1,3,5-trithiane, and thioformaldehyde. In a particularly preferred embodiment, the sulfur-containing compound is carbon disulfide.

Suitable carrier gas includes any of the noble gases including helium, argon, xenon, and neon. Also, suitable as carrier gas are nitrogen, carbon dioxide, nitrous oxide, carbon monoxide, and air. In a preferred embodiment, the carrier gas is argon.

In a preferred embodiment, the sulfur-containing compound and the alkyne are present in a volume ratio sulfur-containing compound/alkyne in a range of from 0.001 to 0.05. In one embodiment, the sulfur-containing compound and the alkyne are present in a ratio sulfur-containing compound/alkyne in a range of from 0.002 to 0.01.

The reinforcement cord is constructed of any of the various metallic reinforcement materials commonly used in cord reinforced rubber articles, including tires. In one embodiment, the reinforcement cord includes steel, galvanized steel, zinc plated steel and brass plated steel. In one embodiment, the tire cord includes polymeric cords. Polymeric cords may include any of the various textile cords as are known in the art, including but not limited to cords constructed from polyamide, polyester, polyketone, rayon, and polyaramid.

The reinforcement cord is exposed to the atmospheric plasma for a time sufficient to deposit an adhesively effective amount of polymerized or partially polymerized sulfur-containing compound and alkyne onto the cord surface. By adhesively effective amount, it is meant that the treated cord will show increased adhesion to a cured rubber compound compared to an untreated cord, as measured by a standard adhesion test such as ASTM Standard D2229-73. Generally, the exposure time required will depend on the concentration of sulfur-containing compound and alkyne in the atomized mixture, the flow rate of atomized mixture into the plasma generator, and the power input to the plasma generator. For a batch process wherein stationary cord is exposed to an atmospheric plasma, the cord is exposed for from 0.01 to 100 seconds. In a continuous process, the exposure time may be characterized by a residence time expressed as the cord path length (e.g., in centimeters) through the plasma generator divided by the cord transit rate (e.g., in cm/sec). The residence time in such a continuous process would then range from 0.01 to 100 seconds.

The flow rate of atomized mixture into the plasma treatment system necessary to obtain an adhesively effective amount of polymerized or partially polymerized sulfur-containing compound and alkyne onto the cord surface will depend on the desired gas velocity (e.g., in cm/sec) passing perpendicular to a characteristic internal cross-sectional area of the plasma treatment system. Necessary flow rate may be determined by one skilled in the art without undue experimentation.

The atmospheric pressure plasma treated cord may be used in a component of a pneumatic tire. The treated cord is calendered or otherwise contacted with a rubber composition to form the tire component using procedures as are known in the art. In various embodiments, the tire component may be a belt, carcass, apex, bead, chipper, flipper, or any other component including a cord reinforcement as are known in the art. In one embodiment, the tire component is a steel belt wherein treated steel reinforcement cords are calendared into a rubber composition.

The rubber composition to be contacted with the treated reinforcement cord includes one or more rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis 1,4 polybutadiene), polyisoprene (including cis 1,4 polyisoprene), butyl rubber, halobutyl rubber such as chlorobutyl rubber or bromobutyl rubber, styrene/isoprene/butadiene rubber, copolymers of 1,3 butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

The rubber composition to be contacted with the treated reinforcement cord may include at least one of methylene donors and methylene acceptors.

In one embodiment, the methylene donor is an N-substituted oxymethylmelamines, of the general formula: 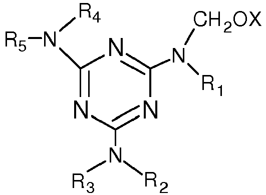 wherein X is hydrogen or an alkyl having from 1 to 8 carbon atoms, R_{1'} R₂, R₃, R₄ and R₅ are individually selected from the group consisting of hydrogen, an alkyl having from 1 to 8 carbon atoms, the group -CH₂OX or their condensation products. Specific methylene donors include hexakis-(methoxymethyl)melamine, N,N',N"-trimethyl/N,N',N"-trimethylolmelamine, hexamethylolmelamine, N,N',N"-dimethylolmelamine, N-methylolmelamine, N,N'-dimethylolmelamine, N,N',N"-tris(methoxymethyl)melamine, N,N'N"-tributyl-N,N',N"-trimethylol-melamine, hexamethoxymethylmelamine, and hexaethoxymethylmelamine. In one embodiment, the N-substituted oxymethylmelamine is hexamethoxymethylmelamine. The N-methylol derivatives of melamine are prepared by known methods.

The amount of N-substituted oxymethylmelamine in the rubber composition may vary. In one embodiment, the amount of N-substituted oxymethylmelamine ranges from 0.5 to 4 phr. In another embodiment, the amount of N-substituted oxymethylmelamine ranges from 1 to 3 phr. The N-substituted oxymethylmelamine may be added as the free compound, or dispersed on a carrier medium such as silica.

In one embodiment, the rubber composition includes a methylene acceptor. The term "methylene acceptor" is known to those skilled in the art and is used to describe the reactant to which a methylene donor reacts to form what is believed to be a methylol monomer. The condensation of the methylol monomer by the formation of a methylene bridge produces the resin. The initial reaction that contributes the moiety that later forms into the methylene bridge is the methylene donor wherein the other reactant is the methylene acceptor. Representative compounds which may be used as a methylene acceptor include but are not limited to resorcinol, resorcinolic derivatives, monohydric phenols and their derivatives, dihydric phenols and their derivatives, polyhydric phenols and their derivatives, unmodified phenol novolak resins, modified phenol novolak resin, resorcinol novolak resins and mixtures thereof. Examples of methylene acceptors include those disclosed in US-A-6,605,670; US-A-6,541,551; US-A-6,472,457; US-A-5,945,500; US-A-5,936,056; US-A-5,688,871; US-A-5,665,799; US-A-5,504,127; US-A-5,405,897; US-A-5,244,725; US-A-5,206,289; US-A-5,194,513; US-A-5,030,692; US-A-4,889,481; US-A-4,605,696; US-A-4,436,853; and US-A-4,092,455. Examples of modified phenol novolak resins include but are not limited to cashew nut oil modified phenol novolak resin, tall oil modified phenol novolak resin and alkyl modified phenol novolak resin. In one embodiment, the methylene acceptor is resorcinol.

Other examples of methylene acceptors include activated phenols by ring substitution and a cashew nut oil modified novolak-type phenolic resin. Representative examples of activated phenols by ring substitution include resorcinol, cresols, t-butyl phenols, isopropyl phenols, ethyl phenols and mixtures thereof. Cashew nut oil modified novolak-type phenolic resins are commercially available from Schenectady Chemicals Inc. under the designation SP6700. The modification rate of oil based on total novolak-type phenolic resin may range from 10 to 50 percent. For production of the novolak-type phenolic resin modified with cashew nut oil, various processes may be used. For example, phenols such as phenol, cresol and resorcinol may be reacted with aldehydes such as formaldehyde, paraformaldehyde and benzaldehyde using acid catalysts. Examples of acid catalysts include oxalic acid, hydrochloric acid, sulfuric acid and p-toluenesulfonic acid. After the catalytic reaction, the resin is modified with the oil.

The amount of methylene acceptor in the rubber stock may vary. In one embodiment, the amount of methylene acceptor, if used, ranges from 0.5 to 5 phr. In another embodiment, the amount of methylene acceptor, if used, ranges from 1 to 3 phr.

In one embodiment, the rubber composition excludes a methylene acceptor. In one embodiment, the rubber composition excludes resorcinol.

It is readily understood by those having skill in the art that the rubber compositions used in tire components would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The rubber compound may contain various conventional rubber additives. In one embodiment, the addition of carbon black comprises 10 to 200 parts by weight of diene rubber (phr). In another embodiment, from 20 to 100 phr of carbon black is used.

A number of commercially available carbon blacks may be used. Included in the list of carbon blacks are those known under the ASTM designations N299, N315, N326, N330, N332, N339, N343, N347, N351, N358, N375, N539, N550 and N582.

Such processing aids may be present and can include, for example, aromatic, naphthenic, and/or paraffinic processing oils. Typical amounts of tackifying resins, such as phenolic tackifiers, range from 1 to 3 phr. Silica, if used, may be used in an amount of 5 to 100 phr, often with a silica coupling agent. Representative silicas may be, for example, hydrated amorphous silicas. Typical amounts of antioxidants comprise 1 to 5 phr. Representative antioxidants may be, for example, diphenyl-p-phenylenediamine, polymerized 1,2-dihydro-2,2,4-trimethylquinoline and others, such as, for example, those disclosed in the Vanderbilt Rubber Handbook (1990), Pages 343 through 362. Typical amounts of antiozonants comprise 1 to 5 phr. Representative antiozonants may be, for example, those disclosed in the Vanderbilt Rubber Handbook (1990), Pages 363 through 367. Typical amounts of fatty acids, if used, which can include stearic acid comprise 0.5 to 3 phr. Typical amounts of zinc oxide comprise 2 to 10 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include insoluble sulfur, elemental sulfur (free sulfur) or sulfur donating vulcanizing agents, for example, an amine disulfide, polymeric polysulfide or sulfur olefin adducts. In one embodiment, the sulfur vulcanizing agent is elemental sulfur. In one embodiment, sulfur vulcanizing agents are used in an amount ranging from 0.5 to 8 phr. In another embodiment 3 to 5 phr of sulfur vulcanizing agents are used.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.5 phr. In another embodiment, combinations of two or more accelerators may be used, including a primary accelerator which is generally used in the larger amount (0.5 to 2.0 phr), and a secondary accelerator which is generally used in smaller amounts (0.05 to 0.50 phr) in order to activate and to improve the properties of the vulcanizate. Combinations of these accelerators have been known to produce a synergistic effect of the final properties and are somewhat better than those produced by use of either accelerator alone. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. In another embodiment, if a second accelerator is used, the secondary accelerator may be a guanidine, dithiocarbamate, thiuram, or a second sulfenamide.

The tire containing the tire component can be built, shaped, molded and cured by various methods which will be readily apparent to those having skill in such art.

The prepared tire of this invention is conventionally shaped and cured by methods known to those having skill in such art.

While the invention as described herein has been directed to tire cords and tires, the method is not so limited. Other applications of reinforcement cords, which includes tire cords, as treated by the methods described herein can be envisioned. Any rubber or elastomer article of manufacture reinforced with reinforcement cords can utilize cords as treated by the methods described herein. For example, applications of the treated reinforcement cords using the plasma methods described herein include reinforced hoses, transmission belts, drive belts, air springs, conveyor belts, drive tracks, and the like. Thus, the methods as described herein as suitable for treatment of tire cords are equally applicable to the treatment of any reinforcement cord as used in reinforced rubber or elastomer articles of manufacture.

The invention is further described with reference to the following examples.

### Example 1

In this example, the effect of treating a steel tire cord with an atmospheric plasma generated by a dielectric barrier discharge is illustrated. A laboratory dielectric barrier discharge apparatus was constructed following concepts as described in US-A-2007/0202270. Each electrode consisted of a parallelepiped of 400 mm long featuring a square section of 16x16 mm. Each electrode included a metal bar embedded in a thick ceramic coating. Additionally, each electrode contained an internal channel for water cooling. The dielectric ceramic coating was non-porous and resistant to fracture upon exposure to a combination of high temperature and aggressive chemical environment. The water cooling circuit used deionized water to prevent electrical conduction via the water in case of rupture of the ceramic insulating coating. The two electrodes were mounted on a frame in such a way to be parallel and face each other. A galvanized steel cord was pulled through a gap between the two electrodes. The gap was adjustable via screws on the back side. The wire/electrode distance was maintained constant over the reactor length to avoid the formation of preferential deposition areas.

Argon as well as the carbon disulfide and/or acetylene precursor were injected in the gap created between the electrodes. To contain the gaseous mixture inside the gap, the sides of the electrodes were covered with a plasma-resistant silicon rubber gasketing material. Basically, a cavity featuring a rectangular cross-section is created.

A series of experiments exposing a steel cord to a plasma was performed, using various power input to electrode, various exposure times of the steel cord to the plasma, and various argon, carbon disulfide, and acetylene gas flow rates into the reactor as given in Table 1. The resulting plasma treated steel cords were embedded to a depth of 19 mm into a cobalt-free rubber wirecoat compound for passenger tires and cured at 155 ºC for 35 minutes. Each cured wire/rubber sample was then tested for adhesion using a tire cord adhesion test (TCAT) following procedures given in Nicholson et al, Tire Science and Technology, TSTCA, Vol. 6, No. 2, May 1978, pp. 114-124. The results of these pull-out tests (TCAT) and percent rubber coverage are given in Table 1.

An initial screening of tire cord adhesion test (TCAT) original adhesion was made to identify promising experiments and plasma coating conditions. The scope of this initial screening was limited to the testing of original adhesion. Results are shown in Table 1. All TCATs were cured in lab-mixed cobalt-free wirecoat compound. Certain experiments (Exp #16, #18, #19, #23, #26, #28, #36, and #37) were selected for further aged adhesion investigations (4-day salt & 4-day steam) as described in Example 2.

Wire plasma coating experiments were performed using respectively pure carbon disulfide, pure acetylene and mixtures thereof. It is clear from Table 1 that carbon disulfide/acetylene blends feature higher adhesion compared to pure carbon disulfide or pure acetylene. Indeed, it is interesting to notice that the use of pure acetylene (Exp #8, #9, #20, #40) leads to significantly lower adhesion results compared to the blend. This observation also holds true for carbon disulfide but to a lesser extent. Based on these observations, all samples selected for further aged adhesion investigation because of high initial pull-out forces were plasma coated using a carbon disulfide/acetylene blend except for Exp #28 which was obtained from pure carbon disulfide.

The benefit of adding acetylene appears very straightforward when comparing Exp #35 to Exp #36. Both experiments were conducted using the exact same settings. Pure carbon disulfide was used for Exp #35 for which a pull-out force of 207 N was obtained while the addition of acetylene (Exp #36) allowed to reach an average pull-out force of 355 N. The same observation can be made by comparing Exp #23 and Exp #27.

The benefit of adding acetylene to carbon disulfide was also very noticeable when increasing the wind up (i.e., wire pull through reactor gap) speed. For pure carbon disulfide, the comparison of Exp #27, #28, #29 that were polymerized under the same conditions but at respectively 3 m/min, 1 m/min and 2 m/min show a large influence of the wind up speed. Indeed, for 1 m/min an average of 332 N is reached in pull-out force while for 2 m/min and 3 m/min an average of about 270 N is obtained.

It can be observed that adhesion results are not as sensitive to the wind up speed when acetylene is introduced concomitantly with carbon disulfide. Exp #36 to #39 included for which increasing line speeds were used illustrate this observation. Indeed, even for a line speed of 5 m/min, an average pull-out force above 300 N is obtained which highlights the fast coating deposition rate achieved due to the presence of acetylene. A trial at 10 m/min (Exp #39) for which the plasma power was increased from 250 W to 300 W resulted in an average pull-out force of 293 N. It is therefore clear that the use of acetylene allows to reach high adhesion at a much higher wind up speed. acetylene therefore plays the role of processing aid.

### Example 2

Samples of plasma coated steel cord that were selected for aged adhesion were cured in cobalt-free rubbed compound. All plasma coated steel cords were used fresh from a vacuum sealed bag. Original adhesion data shown in Table 2 was taken from Example 1 for which TCATs were cured in a different batch of cobalt-free compound.

Table 2 presents a comprehensive visual summary of TCAT pull-out forces for plasma coated wires from selected experiments. The data shows high original adhesion for a few experiments such as Sample 45 (Ex. 1 # 23), Sample 47 and Sample 48 but still somewhat below the ones obtained for brass controls. Nevertheless, it can be observed that pull-out forces increase upon TCAT aging for most plasma coated samples. This is especially true for steam aging for which the higher pull-out forces express a hardening of the compound with no loss in adhesion. Additionally, a large number of brass wire pull-outs have been obtained when pulling steam aged TCATS. As the amount of plasma coated steel cord was limited, it was decided to build all TCATs with a brass-plated steel cord on one end and a plasma coated wire at the opposite end to be able to test all aging conditions.

In addition, it was surprisingly found out that a substantial improvement in pull-out forces after 4-day salt aging was achieved compared to earlier results for pure carbon disulfide plasma coated wires. Here, most experiments show TCAT pull-out forces after 4-day salt aging equal to or better than original values.

Brass controls show no significant differences between the two lab-mixed batches of cobalt-free wirecoat compounds. Differences between original and aged adhesion observed for plasma coated wires can therefore not be accounted for by the use of two different batches of compound.

Overall, Sample 45 and Sample 47 feature the best compromise in original, 4-day steam and 4-day salt adhesion data. In this perspective, it is interesting to notice that Sample 47 was performed with two parallel wires introduced into the reactor.

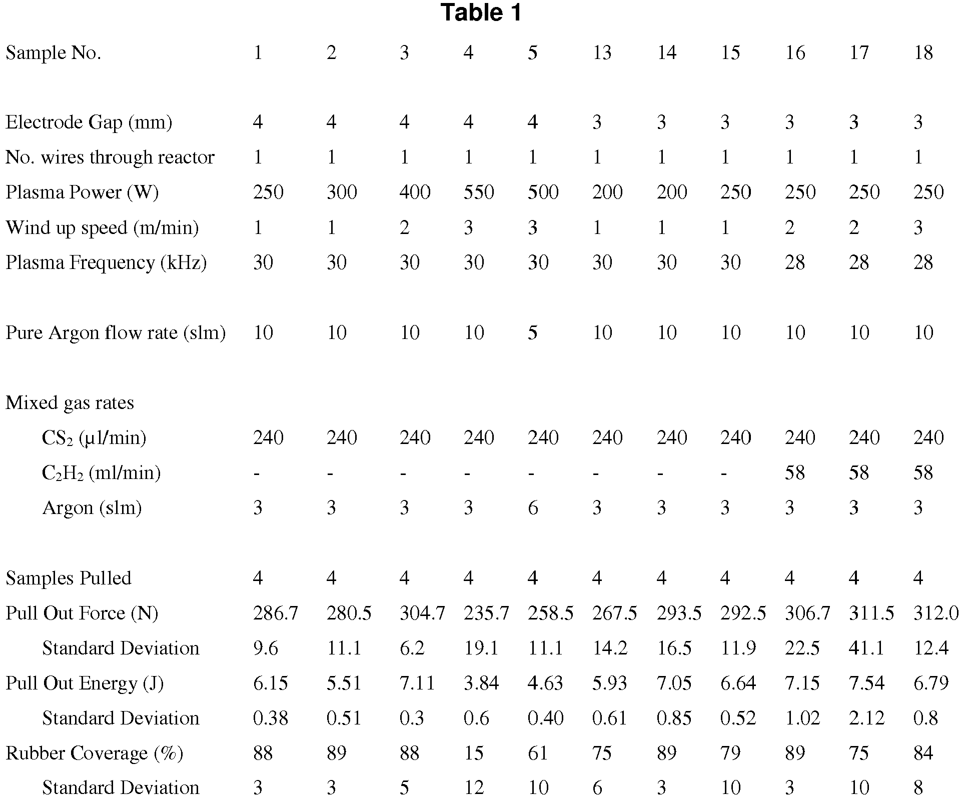

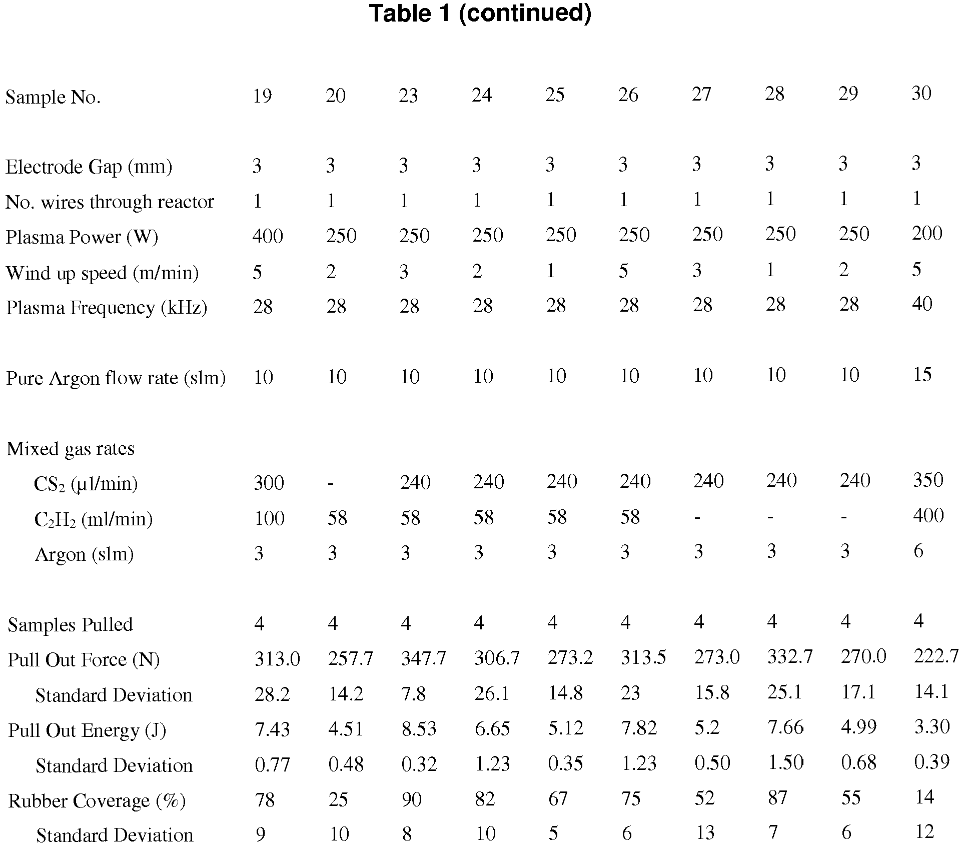

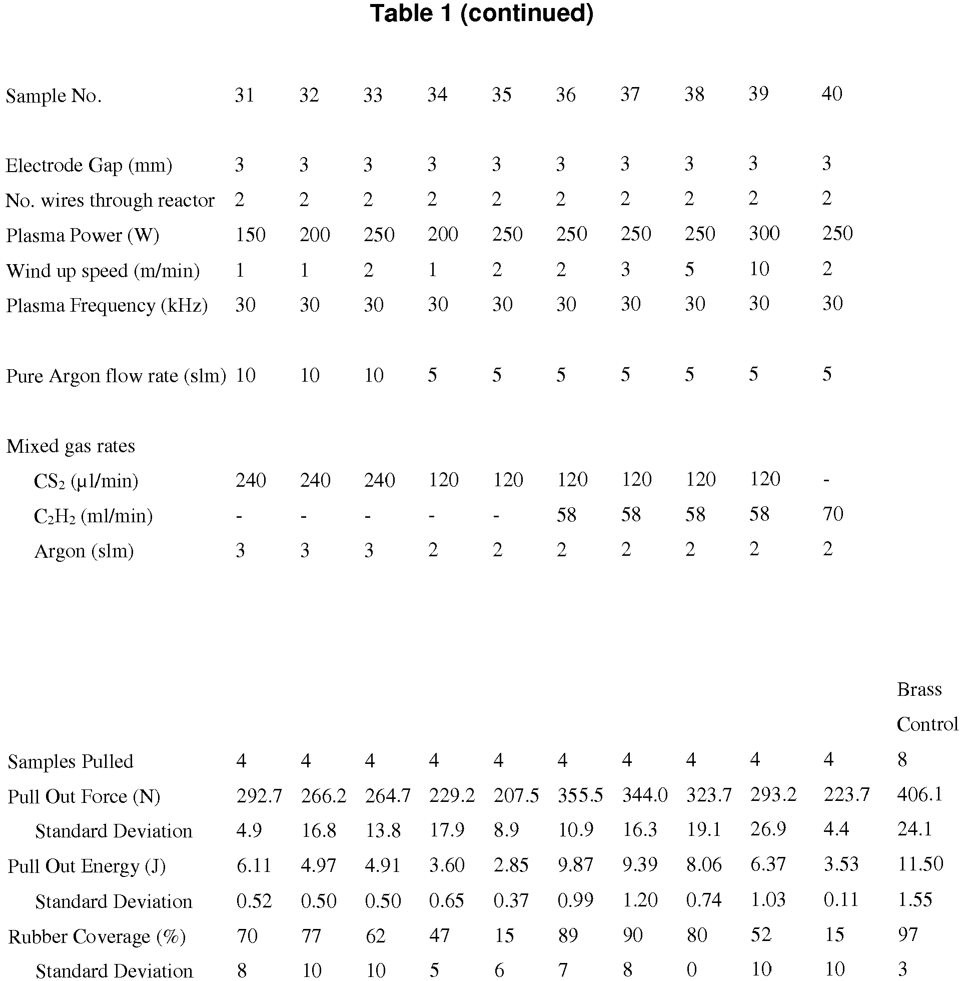

**Table 2**

| Sample No. | 41 | 42 | 43 | 44 | 45 | 46 | 47 | 48 |
|---|---|---|---|---|---|---|---|---|
| (Ex. 1 Sample No.) | (28) | (16) | (18) | (19) | (23) | (26) | (36) | (37) |
| | | | | | | | | |
| Line speed (m/min) | 1 | 2 | 4 | 5 | 3 | 5 | 2 | 3 |
| | | | | | | | | |

| Original | | | | | | | | |
|---|---|---|---|---|---|---|---|---|
| Pull-out force (N) | 332 | 306 | 312 | 313 | 347 | 313 | 355 | 344 |
| Rubber coverage (%) | 87 | 89 | 84 | 78 | 90 | 75 | 89 | 90 |
| | | | | | | | | |

| 4-day Salt exposure | | | | | | | | |
|---|---|---|---|---|---|---|---|---|
| Pull-out force (N) | 287 | 322 | 308 | 333 | 356 | 300 | 342 | 303 |
| Rubber coverage (%) | 52 | 86 | 62 | 75 | 82 | 54 | 69 | 60 |
| | | | | | | | | |

| 4-day Steam exposure | | | | | | | | |
|---|---|---|---|---|---|---|---|---|
| Pull-out force (N) | 392 | 356 | 364 | 342 | 380 | 397 | 379 | 391 |
| Rubber coverage (%) | 98 | 90 | 91 | 90 | 94 | 95 | 97 | 98 |

## Claims

1. A method of making a cord reinforced rubber article, the method comprising the steps of:
a) mixing a carrier gas (13), at least one sulfur-containing compound (15) and an alkyne (17), to form a gas mixture (25);
b) generating an atmospheric pressure plasma (24) from the gas mixture (25);
c) exposing a reinforcement cord (26) to the atmospheric pressure plasma (24) to produce a treated reinforcement cord (28); and
d) contacting the treated reinforcement cord (28) with a rubber composition comprising a diene based elastomer.

2. The method of claim 1, wherein the cord (26) is selected from the group consisting of polyamide, polyester, polyketone, rayon, and polyaramid cords.

3. The method of claim 1, wherein the reinforcement cord (26) is selected from the group consisting of steel, galvanized steel, zinc plated steel and brass plated steel cords.

4. The method of at least one of the previous claims, wherein the at least one sulfur-containing compound (15) is selected from carbon disulfide, carbonyl sulfide, thiophene, dimethyl sulfide, diethyl sulfide, methyl ethyl sulfide, dimethyldisulfide, diethyldisulfide, methyl ethyl disulfide, diphenyldisulfide, chloromethyl methyl sulfide, thiobenzophenone, 1,3,5-trithiane, and thioformaldehyde.

5. The method of claim 4, wherein the sulfur-containing compound (15) is carbon disulfide.

6. The method of at least one of the previous claims, wherein the alkyne (17) is acetylene.

7. The method of at least one of the previous claims, wherein the rubber composition is exclusive of cobalt.

8. The method of at least one of the previous claims, wherein the at least one of sulfur-containing compound (15) and the alkyne (17) are present in a volume ratio in a range of from 0.001 to 0.05.

9. The method of claim 8, wherein the at least one of sulfur-containing compound (15) and the alkyne (17) are present in a volume ratio in a range of from 0.002 to 0.01.

10. The method of at least one of the previous claims, wherein the reinforcement cord (26) is conveyed continuously during exposure to the atmospheric pressure plasma (24).

11. The method of at least one of the previous claims, wherein the carrier gas (13) is selected from the group consisting of argon, helium, neon, xenon, nitrogen, carbon dioxide, nitrous oxide, carbon monoxide, and air.

12. A treated reinforcement cord manufactured by:
a) mixing a carrier gas (13), at least one sulfur-containing compound (15) and an alkyne (17), to form a gas mixture (25);
b) generating an atmospheric pressure plasma (24) from the gas mixture (25);
c) exposing a reinforcement cord (26) to the atmospheric pressure plasma (24) thereby producing the treated reinforcement cord (28).

13. The treated reinforcement cord of claim 12 wherein the reinforcement cord (26) is a metallic reinforcement cord.

14. A reinforced rubber or reinforced elastomer article of manufacture comprising the treated reinforcement cord (28) of claim 12 or 13.

15. The article of manufacture of claim 14, wherein the article is a pneumatic tire or wherein the article is selected from the group consisting of hoses, transmission belts, drive belts, air springs, conveyor belts, and drive tracks.

## Patentansprüche

1. Verfahren zum Herstellen eines kordverstärkten Kautschukartikels, wobei das Verfahren die folgenden Schritte umfasst:
(a) Mischen eines Trägergases (13), wenigstens einer schwefelhaltigen Verbindung (15) und eines Alkins (17), um ein Gasgemisch (25) auszubilden;
(b) Erzeugen eines Atmosphärendruckplasmas (24) aus dem Gasgemisch (25);
(c) Aussetzen eines Verstärkungskords (26) dem Atmosphärendruckplasma (24), um einen behandelten Verstärkungskord (28) zu produzieren; und
(d) Inberührungbringen des behandelten Verstärkungskords (28) mit einer Kautschukzusammensetzung, umfassend ein Elastomer auf Dienbasis.

2. Verfahren nach Anspruch 1, wobei der Kord (26) aus der Gruppe bestehend aus Polyamid-, Polyester-, Polyketon-, Rayon- und Polyaramidkorden ausgewählt ist.

3. Verfahren nach Anspruch 1, wobei der Verstärkungskord (26) aus der Gruppe bestehend aus Stahl-, verzinkten Stahl-, zinkplattierten Stahl- und messingplattierten Stahlkorden ausgewählt ist.

4. Verfahren nach wenigstens einem der vorhergehenden Ansprüche, wobei die wenigstens eine schwefelhaltige Verbindung (15) ausgewählt wird aus Schwefelkohlenstoff, Carbonylsulfid, Thiophen, Dimethylsulfid, Diethylsulfid, Methylethylsulfid, Dimethyldisulfid, Diethyldisulfid, Methylethyldisulfid, Diphenyldisulfid, Chlormethylmethylsulfid, Thiobenzophenon, 1,3,5-Trithian und Thioformaldehyd.

5. Verfahren nach Anspruch 4, wobei die schwefelhaltige Verbindung (15) Schwefelkohlenstoff ist.

6. Verfahren nach wenigstens einem der vorhergehenden Ansprüche, wobei das Alkin (17) Acetylen ist.

7. Verfahren nach wenigstens einem der vorhergehenden Ansprüche, wobei die Kautschukzusammensetzung ausschließlich Kobalt ist.

8. Verfahren nach wenigstens einem der vorhergehenden Ansprüche, wobei die schwefelhaltige Verbindung (15) und/oder das Alkin (17) in einem Volumenverhältnis in einem Bereich von 0,001 bis 0,05 vorhanden sind.

9. Verfahren nach Anspruch 8, wobei die schwefelhaltige Verbindung (15) und/oder das Alkin (17) in einem Volumenverhältnis in einem Bereich von 0,002 bis 0,01 vorhanden sind.

10. Verfahren nach wenigstens einem der vorhergehenden Ansprüche, wobei der Verstärkungskord (26) während der Einwirkung des Atmosphärendruckplasmas (24) kontinuierlich gefördert wird.

11. Verfahren nach wenigstens einem der vorhergehenden Ansprüche, wobei das Trägergas (13) aus der Gruppe bestehend aus Argon, Helium, Neon, Xenon, Stickstoff, Kohlendioxid, Stickstoffoxid, Kohlenmonoxid und Luft ausgewählt ist.

12. Behandelter Verstärkungskord, angefertigt durch:
(a) Mischen eines Trägergases (13), wenigstens einer schwefelhaltigen Verbindung (15) und eines Alkins (17), um ein Gasgemisch (25) auszubilden;
(b) Erzeugen eines Atmosphärendruckplasmas (24) aus dem Gasgemisch (25);
(c) Aussetzen eines Verstärkungskords (26) dem Atmosphärendruckplasma (24), wodurch ein behandelter Verstärkungskord (28) produziert wird.

13. Behandelter Verstärkungskord nach Anspruch 12, wobei der Verstärkungskord (26) ein metallischer Verstärkungskord ist.

14. Verstärktes Kautschuk- oder verstärktes Elastomeranfertigungserzeugnis, umfassend den behandelten Verstärkungskord (28) nach Anspruch 12 oder 13.

15. Anfertigungserzeugnis nach Anspruch 14, wobei das Erzeugnis ein pneumatischer Reifen ist oder wobei das Erzeugnis ausgewählt ist aus der Gruppe bestehend aus Schläuchen, Treibriemen, Antriebsriemen, Luftfedern, Transportbändern und Antriebsschienen.

## Revendications

1. Procédé de fabrication d'un article en caoutchouc renforcé avec des câblés, le procédé comprenant les étapes consistant à :
a) mélanger un gaz porteur (13), au moins un composé renfermant du soufre (15) et un alcyne (17) afin d'obtenir un mélange gazeux (25) ;
b) générer un plasma sous pression atmosphérique (24) à partir du mélange gazeux (25) ;
c) exposer un câblé de renforcement (26) au plasma sous pression atmosphérique (24) afin d'obtenir un câblé de renforcement traité (28) ; et
d) mettre le câblé de renforcement traité (28) en contact avec une composition de caoutchouc comprenant un élastomère à base diénique.

2. Procédé selon la revendication 1, dans lequel le câblé (26) est choisi parmi le groupe constitué par des câblés de polyamide, de polyester, de polycétone, de rayonne et de polyaramide.

3. Procédé selon la revendication 1, dans lequel le câblé de renforcement (26) est choisi parmi le groupe constitué par des câblés en acier, en acier galvanisé, en acier plaqué au zinc et en acier plaqué au laiton.

4. Procédé selon au moins une des revendications précédentes, dans lequel ledit au moins un composé renfermant du soufre (15) est choisi parmi le disulfure de carbone, le sulfure de carbonyle, le thiophène, le diméthyl sulfure, le diéthyl sulfure, le méthyl éthyl sulfure, le diméthyl disulfure, le diéthyl disulfure, le méthyl éthyl disulfure, le diphényl disulfure, le chlorométhyl méthyl sulfure, la thiobenzophénone, le 1,3,5-trithiane et le thioformaldéhyde.

5. Procédé selon la revendication 4, dans lequel le composé renfermant du soufre (15) est le disulfure de carbone.

6. Procédé selon au moins une des revendications précédentes, dans lequel l'alcyne (17) est l'acétylène.

7. Procédé selon au moins une des revendications précédentes, dans lequel la composition de caoutchouc ne contient pas de cobalt.

8. Procédé selon au moins une des revendications précédentes, dans lequel ledit au moins un composé renfermant du soufre (15) et l'alcyne (17) sont présents dans un rapport volumique qui se situe dans une plage de 0,001 à 0,05.

9. Procédé selon la revendication 8, dans lequel ledit au moins un composé renfermant du soufre (15) et l'alcyne (17) sont présents dans un rapport volumique qui se situe dans une plage de 0,002 à 0,01.

10. Procédé selon au moins une des revendications précédentes, dans lequel le câblé de renforcement (26) est acheminé en continu au cours de son exposition au plasma sous pression asphérique (24).

11. Procédé selon au moins une des revendications précédentes, dans lequel le gaz porteur (13) est choisi parmi le groupe constitué par l'argon, l'hélium, le néon, le xénon, l'azote, le dioxyde de carbone, le protoxyde d'azote, le monoxyde de carbone et l'air.

12. Câblé de renforcement traité fabriqué par le fait de :
a) mélanger un gaz porteur (13), au moins un composé renfermant du soufre (15) et un alcyne (17) afin d'obtenir un mélange gazeux (25) ;
b) générer un plasma sous pression atmosphérique (24) à partir du mélange gazeux (25) ;
c) exposer un câblé de renforcement (26) au plasma sous pression atmosphérique (24) afin d'obtenir le câblé de renforcement traité (28).

13. Câblé de renforcement traité selon la revendication 12, dans lequel le câblé de renforcement (26) représente un câblé de renforcement de type métallique.

14. Produit manufacturé à base d'un caoutchouc renforcé ou d'un élastomère renforcé, comprenant le câblé de renforcement traité (28) selon la revendication 12 ou 13.

15. Produit manufacturé selon la revendication 14, dans lequel le produit représente un bandage pneumatique ; ou dans lequel le produit est choisi parmi le groupe constitué par des tuyaux flexibles, des courroies de transmission, des courroies d'entraînement, des ressorts pneumatiques, des courroies transporteuses et des chenilles.
